# EUROPEAN PATENT APPLICATION

(11) **EP 4 737 407 A1**
(43) Date of publication of application: **06.05.2026**
(21) Application number: 24210465.1
(22) Date of filing: 04.11.2024
(51) Int. Cl.: C03C 3/064, C03C 3/14, C03C 4/02, C03C 8/04, C03C 8/14, C03C 17/36

(54) **LOW MELTING CRYSTALLIZING ENAMEL FOR LOW EMISSIVITY COATED GLASS SUBSTRATE**

(71) Applicant: Vibrantz GmbH, 60327 Frankfurt am Main (DE)
(72) Inventor: Paulus, Hildegard, 60322 Frankfurt am Main (DE); Eschmann, Kathrin, 55296 Gau-Bischofsheim (DE); Schelling, Volker, 63589 Linsengericht (DE); Kohlenbeck, Christina, Darmstadt 64291 (DE); Saberi, Ali, 60599 Frankfurt am Main (DE)
(74) Representative: Gille Hrabal Partnerschaftsgesellschaft mbB Patentanwälte

(57) **Abstract**

Described is a composition tailored in particular for automotive and flat glass applications as a glaze and/or enamel composition. Moreover, the present invention relates to a method of applying the composition on a Low-e coated side of a glass surface, in particular in the field of laminated automotive windshields, sunroofs, backlights produced via press bending process as well as architectural glass. Notably, composition according to the present invention facilitates Low-e coating dissolution and direct fusion to the glass substrate while preserving essential optical properties, and adhesion-meeting industry standards.

## Description

The present invention relates to a composition tailored in particular for automotive and flat glass applications as a glaze and/or enamel composition. Moreover, the present invention relates to a method of applying the composition on a Low-e coated side of a glass surface, in particular in the field of laminated automotive windshields, sunroofs, backlights produced via press bending process as well as architectural glass. Notably, composition according to the present invention facilitates Low-e coating dissolution and direct fusion to the glass substrate while preserving essential optical properties, and adhesion-meeting industry standards.

Low-Emissivity (Low-E) coatings are thin, transparent layers applied to glass surfaces to reduce heat transfer and improve energy efficiency. These coatings are designed to reflect infrared (IR) radiation while allowing visible light to pass through, helping to regulate temperature by minimizing heat loss in cold weather and reducing heat gain in hot weather.

Despite reflecting infrared heat, Low-E coatings are designed to allow visible light to pass through, ensuring that the natural brightness of the outdoors is not compromised. This makes Low-E glass energy-efficient while still being transparent and visually clear.

There are two main types of Low-E coatings, typically classified based on how they are applied and their functionality:
Soft Coat (High-Performance Low-E) coatings are made by depositing multiple layers of silver or other metals onto the glass using a vacuum deposition process. Soft coats are typically applied to the inside surfaces of the glass in insulating glass units (IGUs) (i.e., double or triple glazing). These coatings are more effective at reflecting infrared radiation, thus offering better insulation, but they are more vulnerable to damage and must be protected by placing them between layers of glass.

Hard Coat (Durable Low-E) coatings are made by applying a thin oxide layer to the glass during manufacturing, often as part of the glass itself. These coatings are more durable and scratch-resistant compared to soft coats but are slightly less effective in reflecting infrared radiation. Hard coats are often used in single-glazed windows or as part of laminated glass.

Benefits of Low-E Coatings are the reduction of heating and cooling costs by improving the thermal performance of windows. In the winter, they minimize heat loss, and in the summer, they help keep the interior cool by reducing heat from outside. Low-E glass blocks a significant amount of ultraviolet (UV) light, which helps to prevent fading furniture, curtains, carpets, and other interior furnishings. By minimizing the transfer of heat, Low-E windows help maintain a consistent indoor temperature, improving comfort for building occupants. Finally, insulating glass units with Low-E coatings may offer some reduction in noise transmission from outside, although this is primarily achieved by increasing the number of glass layers or the thickness of the air space between them.

That said, low-Emissivity (Low-E) coatings on glass play a crucial role in both automotive and architectural applications by enhancing energy efficiency and providing the various protective benefits mentioned above.

The majority of Low-E coatings are stack of few micrometers thin multilayer typically composed of silver protected with oxide/non-oxide protecting multi layers such as SnO₂, ZnAlOₓ, SiOₓ, Si₃N₄, SiOₓN_{y}, Nb₂O₅, TiOₓ, ZnOₓ/AlOₓ, NiCrOₓ, ZnSnOₓ, indium-tin oxide (ITO), creating a smooth and non-porous surface. In certain applications, such as in the automotive glass industry, it may be necessary to decorate or cover portions of a glass substrate with enamel. For example, an obscuration enamel might be applied around the edges of the substrate to protect an underlying adhesive from UV damage. However, standard commercially available enamels are not suitable for use on glass substrates coated with Low-E coatings because they cannot completely etch through multilayer coatings. This limitation can lead to issues such as discoloration, poor adhesion, delamination, and loss of coating functionality.

To address this, the coating must first be removed chemically or mechanically using abrasive wheels or laser beams from the area where the enamel will be applied, allowing the enamel to fuse directly with the bare glass. This additional process is costly and can introduce quality defects, mechanical damage, create unwanted flaws, and reduce the mechanical properties of the final glass substrate.

To avoid the edge deletion process, different approaches were practiced.

One of these approaches is a two-step process disclosed in WO 2019/016639 A. In the first step, a provisional corrosive enamel in the form of a paste which contains inter alia P₂O₅-Na₂O is applied to the desired area. The glass substrate is then fired at a temperature of 500 to 700 °C, where the provisional enamel digests the Low-e coating. After heating, the glass substrate is washed with water or a similar solution to remove excess material from the glass and then provided with a final enamel. However, this approach may not be suitable for most Low-e coating systems and has the disadvantage of introducing an extra step, as well as additional energy and cost.

WO 2021/023965 A provides another approach by using an enamel comprising 10 to 40 mol% ZnO, 20 to 40 mol% B₂O₃, 25 to 65 mol% Bi₂O₃, TeO₂, or PbO, or mixtures thereof, and up to 15 mol% Al₂O₃. It is disclosed that this enamel is a suitable one-step solution to etch multilayer coated including low-E coated glass substrates and can be used to decorate or cover the coated glass without causing defects such as discoloration, lack of adhesion, delamination, and loss of coating functionality. However, in automotive glass manufacturing, the press bending process requires specific anti-stick properties to ensure smooth operation and high-quality end products. These requirements are not fulfilled by the teaching of WO 2021/023965 A.

An alternative approach is disclosed in WO 2014/133929 A, where the ceramic frit chemically attacks and dissolves the Low-E coating at elevated temperatures. However, this solution does also not address the anti-stick properties required for press bending of automotive glass.

Another approach is disclosed in WO 2021/122856 A and WO 2021/165342 A, in which an anti-stick paint is first applied and pre-fired. Thereafter, a multilayer coating on the glazing and on at least a part of the fired enamel coating on the glazing is deposited to form a coated glass sheet.

As low-E coating dissolving enamels primarily rely on low melting glass compositions, achieving the desired anti-stick properties at the end of the firing process proves challenging. Additionally, the introduction of common crystallizing agents, well-known to experts in the field, may adversely affect the efficiency of the enamel's coating removal function. However, WO 2022/153001 A discloses refractory particles, ranging in diameter from 20 to 80 microns, being applied together with the enamel. This creates a sufficiently large gap between the pressing tool and the glass substrate. In other words, this ceramic color paste has a mold releasability and can be used in a production method where two sheets of glass are bent and formed simultaneously. However, using coarse refractory particles can negatively affect production efficiency due to the risk of obstructing the sieve mesh with such coarse particles.

Therefore, there is still a need for a more efficient one-step technique to apply non-adhering enamel onto low-E coated glass substrates, ensuring robust adhesion and preventing undesired color alterations. Additionally, it should meet the anti-stick criteria required for shaping automotive glass through pressing.

The present invention solves these problems by meticulously selecting a suitable composition of a glass composition and a ceramic enamel to ensure complete digestion of commercially available low-E coating systems. As a result, the enamel fuses directly to the glass surface (bare glass), providing thereby the proper anti-stick properties necessary for press bending.

The present invention provides in a first aspect a glass composition, comprising, based on the total weight of the composition, bismuth ions in an amount of 30 to 90 wt.%, calculated as Bi₂O₃, zinc ions in an amount of 3 to 30 wt.%, calculated as ZnO, boron ions in an amount of 0,1 to 20 wt.%, calculated as B₂O₃.

The claimed composition is characterized in that the weight ratio between bismuth ions and zinc ions, calculated as Bi₂O₃ and ZnO, is 3 to 12.

It has been found surprisingly that such a glass composition, together with further components, are suitable for facilitating Low-e coating dissolution and direct fusion to the glass substrate while preserving essential optical properties, and adhesion-meeting industry standards.

Nowadays standard black anti-stick enamels consist mainly of one or more glass fluxes containing Bi₂O₃, ZnO, B₂O₃, R₂O, RO₂ and SiO₂, mainly Cu-Cr spinels and/or Mn-Cu-Cr spinels and bismuth or zinc silicate. The bismuth or zinc silicate is a seed material so that the glass enamel partially crystallizes during firing and prevent bonding between the two glass panes or between the glass pane and the bending tools during bending.

The present invention now provides an alternative for such anti-stick enamels.

In one aspect of the present invention, the weight ratio between bismuth ions and zinc ions, calculated as Bi₂O₃ and ZnO, is 4 to 11.

In a further aspect of the present invention, the weight ratio between bismuth ions and zinc ions, calculated as Bi₂O₃ and ZnO, is 5 to 10.

In the following, the composition of the composition according to the present invention is further described.

In one aspect, the composition according to the present invention comprises bismuth ions in an amount of 40 to 85 wt%, more preferably 60 to 80 wt%, based on the total weight of the composition, calculated as Bi₂O₃.

In a further aspect, the composition according to the present invention comprises 3 to 20 wt%, more preferably 5 to 18 wt%, zinc ions, based on the total weight of the composition, calculated as ZnO.

In a further aspect, the composition according to the present invention comprises 0,1 to 18 wt%, more preferably 0,1 to 15 wt%, boron ions, based on the total weight of the composition, calculated as B₂O₃.

In a further aspect, the composition according to the present invention comprises less than 10 wt.%, preferably less than 8 wt.%, more preferably less than 7 wt.%, %, based on the total weight of the composition, sodium ions, potassium ions and lithium ions, calculated as Na₂O, K₂O, and Li₂O. Such alkali oxides are preferred to reduce the softening point of the claimed composition, but it is also possible to achieve a proper composition without alkali oxides.

In a further aspect, the composition according to the present invention comprises silicon ions in an amount of 0 to 5 wt.%, preferably 0 to 3 wt.%, more preferably 0 to 2 wt.%, based on the total weight of the composition, calculated as SiOz.

The present composition can be provided and used for the intended purpose in two different embodiments.

### First embodiment

In the first embodiment of the present invention, the above-mentioned glass composition is supplemented with iron ions and manganese ions and thereafter molted. The resulting molted glass frit, is then used for the intended purpose of digesting commercially available low-E coating systems and to fuses directly to the glass surface (bare glass) providing thereby the proper anti-stick properties necessary for press bending.

In this first embodiment, the composition according to the present invention further comprises preferably 0,1 to 7 wt.%, preferably 0,1 to 5 wt.%, more preferably 0,1 to 3 wt.%, iron ions, based on the total weight of the composition, calculated as Fe₂O₃.

In this first embodiment, the composition according to the present invention further comprises preferably 0,1 to 7 wt.%, preferably 0,1 to 5 wt.%, more preferably 0 to 3 wt.%, manganese ions, based on the total weight of the composition, calculated as MnO.

In this first embodiment, the composition according to the present invention further comprises preferably 0,1 to 7 wt.% iron ions, based on the total weight of the composition, calculated as Fe₂O₃, and preferably 0,1 to 7 wt.%, preferably 0,1 to 5 wt.%, more preferably 0 to 3 wt.%, manganese ions, based on the total weight of the composition, calculated as MnO.

In this first embodiment, the composition according to the present invention further comprises preferably 0,1 to 5 wt.% iron ions, based on the total weight of the composition, calculated as Fe₂O₃, and preferably 0,1 to 7 wt.%, preferably 0,1 to 5 wt.%, more preferably 0 to 3 wt.%, manganese ions, based on the total weight of the composition, calculated as MnO.

In this first embodiment, the composition according to the present invention further comprises preferably 0,1 to 3 wt.% iron ions, based on the total weight of the composition, calculated as Fe₂O₃, and preferably 0,1 to 7 wt.%, preferably 0,1 to 5 wt.%, more preferably 0 to 3 wt.%, manganese ions, based on the total weight of the composition, calculated as MnO.

In this first embodiment, the composition according to the present invention is free of Al₂O₃.

Based on the above-mentioned components of the composition according to the present invention, the resulting composition has a softening point below 480 °C, preferably below 465 °C, more preferably below 450 °C.

In the first embodiment of the present invention, the composition according to the present invention is molten and used for the intended purpose in the form of molten glass.

In the following, further aspects of the first embodiments are described.

The composition according to the first composition comprises a glass composition, comprising, based on the total weight of the composition,
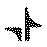 bismuth ions calculated as Bi₂O₃ in an amount of 30 to 90 wt.%,
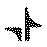 zinc ions calculated as ZnO in an amount of 3 to 30 wt.%,
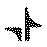 boron ions calculated as B₂O₃ in an amount of 0,1 to 20 wt.%,

whereby the glass composition further comprises preferably 0,1 to 7 wt.%, more preferably 0,1 to 5 wt.%, more preferably 0,1 to 3 wt.%, iron ions, based on the total weight of the composition, each calculated as Fe₂O₃, and
wherein the weight ratio between bismuth ions and zinc ions, calculated as Bi₂O₃ and ZnO, is 3 to 12.

The composition according to the first composition comprises a glass composition, comprising, based on the total weight of the composition,
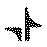 bismuth ions calculated as Bi₂O₃in an amount of 30 to 90 wt.%,
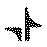 zinc ions calculated as ZnO in an amount of 3 to 30 wt.%,
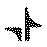 boron ions calculated as B₂O₃ in an amount of 0,1 to 20 wt.%,

whereby the glass composition further comprises preferably 0,1 to 7 wt.%, more preferably 0,1 to 5 wt.%, more preferably 0 to 3 wt.%, manganese ions, based on the total weight of the composition, each calculated as MnO, and
wherein the weight ratio between bismuth ions and zinc ions, calculated as Bi₂O₃ and ZnO, is 3 to 12.

The composition according to the first composition comprises a glass composition, comprising, based on the total weight of the composition,
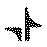 bismuth ions calculated as Bi₂O₃ in an amount of 30 to 90 wt.%,
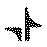 zinc ions calculated as ZnO in an amount of 3 to 30 wt.%,
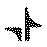 boron ions calculated as B₂O₃ in an amount of 0,1 to 20 wt.%,
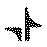 iron ions in an amount of preferably 0,1 to 7 wt.%, more preferably 0,1 to 5 wt.%, more preferably 0,1 to 3 wt.%, based on the total weight of the composition, each calculated as Fe₂O₃,
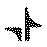 manganese ions in an amount of preferably 0,1 to 7 wt.%, more preferably 0,1 to 5 wt.%, more preferably 0,1 to 3 wt.%, based on the total weight of the composition, each calculated as MnO,
wherein the weight ratio between bismuth ions and zinc ions, calculated as Bi₂O₃ and ZnO, is 3 to 12.

The composition according to the first composition comprises a glass composition, comprising, based on the total weight of the composition,
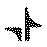 bismuth ions calculated as Bi₂O₃ in an amount of 40 to 85 wt.%,
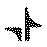 zinc ions calculated as ZnO in an amount of 3 to 20 wt.%,
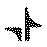 boron ions calculated as B₂O₃ in an amount of 0,1 to 18 wt.%,

whereby the glass composition further comprises preferably 0,1 to 7 wt.%, more preferably 0,1 to 5 wt.%, more preferably 0,1 to 3 wt.%, iron ions, based on the total weight of the composition, each calculated as Fe₂O₃, and
wherein the weight ratio between bismuth ions and zinc ions, calculated as Bi₂O₃ and ZnO, is 4 to 11.

The composition according to the first composition comprises a glass composition, comprising, based on the total weight of the composition,
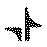 bismuth ions calculated as Bi₂O₃ in an amount of 40 to 85 wt.%,
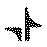 zinc ions calculated as ZnO in an amount of 3 to 20 wt.%,
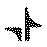 boron ions calculated as B₂O₃ in an amount of 0,1 to 18 wt.%, ,

whereby the glass composition further comprises preferably 0,1 to 7 wt.%, more preferably 0,1 to 5 wt.%, more preferably 0 to 3 wt.%, manganese ions, based on the total weight of the composition, each calculated as MnO, and
wherein the weight ratio between bismuth ions and zinc ions, calculated as Bi₂O₃ and ZnO, is 4 to 11.

The composition according to the first composition comprises a glass composition, comprising, based on the total weight of the composition,
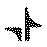 bismuth ions calculated as Bi₂O₃ in an amount of 40 to 85 wt.%,
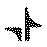 zinc ions calculated as ZnO in an amount of 3 to 20 wt.%,
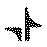 boron ions calculated as B₂O₃ in an amount of 0,1 to 18 wt.%,

whereby the glass composition further comprises preferably 0,1 to 7 wt.%, more preferably 0,1 to 5 wt.%, more preferably 0,1 to 3 wt.%, iron ions, based on the total weight of the composition, calculated as Fe₂O₃, and
whereby the glass composition further comprises preferably 0,1 to 7 wt.%, more preferably 0,1 to 5 wt.%, more preferably 0 to 3 wt.%, manganese ions, based on the total weight of the composition, each calculated as MnO, and
wherein the weight ratio between bismuth ions and zinc ions, calculated as Bi₂O₃ and ZnO, is 4 to 11.

The composition according to the first composition comprises a glass composition, comprising, based on the total weight of the composition,
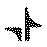 bismuth ions calculated as Bi₂O₃in an amount of 60 to 80 wt.%,
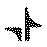 zinc ions calculated as ZnO in an amount of 5 to 18 wt.%,
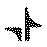 boron ions calculated as B₂O₃in an amount of 0,1 to 15 wt.%,

whereby the glass composition further comprises preferably 0,1 to 7 wt.%, more preferably 0,1 to 5 wt.%, more preferably 0,1 to 3 wt.%, iron ions, based on the total weight of the composition, each calculated as Fe₂O₃, and
wherein the weight ratio between bismuth ions and zinc ions, calculated as Bi₂O₃ and ZnO, is 5 to 10.

The composition according to the first composition comprises a glass composition, comprising, based on the total weight of the composition,
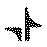 bismuth ions calculated as Bi₂O₃ in an amount of 60 to 80 wt.%,,
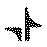 zinc ions calculated as ZnO in an amount of 5 to 18 wt.%,
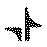 boron ions calculated as B₂O₃ in an amount of 0,1 to 15 wt.%,

whereby the glass composition further comprises preferably 0,1 to 7 wt.%, more preferably 0,1 to 5 wt.%, more preferably 0 to 3 wt.%, manganese ions, based on the total weight of the composition, each calculated as MnO, and
wherein the weight ratio between bismuth ions and zinc ions, calculated as Bi₂O₃ and ZnO, is 5 to 10.

The composition according to the first composition comprises a glass composition, comprising, based on the total weight of the composition,
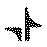 bismuth ions calculated as Bi₂O₃in an amount of 60 to 80 wt.%,
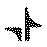 zinc ions calculated as ZnO in an amount of 5 to 18 wt.%,
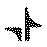 boron ions calculated as B₂O₃in an amount of 0,1 to 15 wt.%,

whereby the glass composition further comprises preferably 0,1 to 7 wt.%, more preferably 0,1 to 5 wt.%, more preferably 0,1 to 3 wt.%, iron ions, based on the total weight of the composition, each calculated as Fe₂O₃, and
whereby the glass composition further comprises preferably 0,1 to 7 wt.%, more preferably 0,1 to 5 wt.%, more preferably 0 to 3 wt.%, manganese ions, based on the total weight of the composition, each calculated as MnO, and
wherein the weight ratio between bismuth ions and zinc ions, calculated as Bi₂O₃ and ZnO, is 5 to 10.

In a further aspect, the above-mentioned compositions according to the present invention comprises less than 10 wt.%, preferably less than 8 wt.%, more preferably less than 7 wt.%, %, based on the total weight of the composition, sodium ions, potassium ions and lithium ions, each calculated as Na₂O, K₂O, and Li₂O. Such alkali oxides are preferred to reduce the softening point of the claimed composition, but it is also possible to achieve a proper composition without alkali oxides.

In a further aspect, the above-mentioned compositions according to the present invention comprises silicon ions in an amount of 0 to 5 wt.%, preferably 0 to 3 wt.%, more preferably 0 to 2 wt.%, based on the total weight of the composition, calculated as SiOz.

### Second embodiment

In the second embodiment of the present invention, the above-mentioned glass composition is supplemented with an iron containing pigment in an amount of preferably 0,1 to 30 wt.%, preferably 0,1 to 25 wt.%, more preferably 0,1 to 22 wt.%, based on the total weight of the composition.

In this second embodiment, the iron containing pigment is selected from the group, consisting of Fe, FeₓSi₁₋ₓ (x = 0,01 - 1), Fe₃O₄, FeOOH, ZnFe₂O₄, (Cr,Fe)₂O₃, Fe₂O₃, MnFe₂O₄, (Fe,Cr)₂O₄, (Ni,Fe)(Cr,Fe)₂O₄, Fe₂TiO₄, Fe₂TiO₅, MnFe₂O₄, FeS and mixtures thereof.

The iron containing pigment comprises iron preferably in an oxidation state +2 or +3.

In the second embodiment, the iron content containing pigment contains iron with a content of preferably more than 1,00 wt.-%, more preferably more than 1,25 wt.-%, more preferably more than 1,50 wt.-%, based on the total weight of the iron containing pigment.

In the second embodiment, the above-mentioned glass composition is supplemented with preferably 0,1 to 10 wt.%, more preferably 0,1 to 6 wt.%, more preferably 0,1 to 4 wt.%, based on the total weight of the composition, of a manganese containing pigment.

In this second embodiment, the manganese containing pigment is preferably selected from the group consisting of manganese ferrite, bismuth manganese oxide, bixbyite, MnO₂, Mn₂O₃ and Mn₃O₄.

In the second embodiment, the manganese containing pigment contains manganese with a content of preferably more than 10,00 wt.-%, more preferably more than 12,50, wt.-%, more preferably more than 15,00 wt.-%

In the second embodiment of the present invention, the composition according to the present invention is provided by a physical mixture of the above-mentioned glass composition and the additional supplements of the iron-containing pigment and the manganese-containing pigment. The composition of the second embodiment is used as a physical mixture for the intended purpose.

In the following, further aspects of the first embodiments are described.

The composition according to the second composition comprises a glass composition, comprising, based on the total weight of the composition,
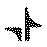 bismuth ions in an amount of 30 to 90 wt.%, calculated as Bi₂O₃,
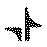 zinc ions in an amount of 3 to 30 wt.%, calculated as ZnO,
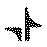 boron ions in an amount of 0,1 to 20 wt.%, calculated as B₂O₃,

whereby the glass composition is provided in a physical mixture with an iron containing pigment in an amount of preferably 0,1 to 30 wt.%, preferably 0,1 to 25 wt.%, more preferably 0,1 to 22 wt.%, based on the total weight of the composition, and
wherein the weight ratio between bismuth ions and zinc ions, calculated as Bi₂O₃ and ZnO, in the glass composition is 3 to 12.

The composition according to the second composition comprises a glass composition, comprising, based on the total weight of the composition,
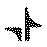 bismuth ions in an amount of 30 to 90 wt.%, calculated as Bi₂O₃,
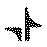 zinc ions in an amount of 3 to 30 wt.%, calculated as ZnO,
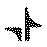 boron ions in an amount of 0,1 to 20 wt.%, calculated as B₂O₃,

whereby the glass composition is provided in a physical mixture with a manganese containing pigment in an amount of preferably 0,1 to 10 wt.%, more preferably 0,1 to 6 wt.%, more preferably 0,1 to 4 wt.%, based on the total weight of the composition, and
wherein the weight ratio between bismuth ions and zinc ions, calculated as Bi₂O₃ and ZnO, in the glass composition is 3 to 12.

The composition according to the second composition comprises a glass composition, comprising, based on the total weight of the composition,
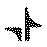 bismuth ions in an amount of 30 to 90 wt.%, calculated as Bi₂O₃,
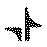 zinc ions in an amount of 3 to 30 wt.%, calculated as ZnO,
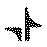 boron ions in an amount of 0,1 to 20 wt.%, calculated as B₂O₃,

whereby the glass composition is provided in a physical mixture with an iron containing pigment in an amount of preferably 0,1 to 30 wt.%, preferably 0,1 to 25 wt.%, more preferably 0,1 to 22 wt.%, based on the total weight of the composition,
whereby the glass composition is provided in a physical mixture with a manganese containing pigment in an amount of preferably 0,1 to 10 wt.%, more preferably 0,1 to 6 wt.%, more preferably 0,1 to 4 wt.%, based on the total weight of the composition, and
wherein the weight ratio between bismuth ions and zinc ions, calculated as Bi₂O₃ and ZnO, in the glass composition is 3 to 12.

The composition according to the second composition comprises a glass composition, comprising, based on the total weight of the composition, 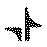
bismuth ions in an amount of 40 to 85 wt.%, calculated as Bi₂O₃,
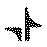 zinc ions in an amount of 3 to 20 wt.%, calculated as ZnO,
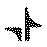 boron ions in an amount of 0,1 to 18 wt.%, calculated as B₂O₃,

whereby the glass composition is provided in a physical mixture with an iron containing pigment in an amount of preferably 0,1 to 30 wt.%, preferably 0,1 to 25 wt.%, more preferably 0,1 to 22 wt.%, based on the total weight of the composition, and
wherein the weight ratio between bismuth ions and zinc ions, calculated as Bi₂O₃ and ZnO, in the glass composition is 4 to 11.

The composition according to the second composition comprises a glass composition, comprising, based on the total weight of the composition,
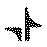 bismuth ions in an amount of 40 to 85 wt.%, calculated as Bi₂O₃,
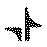 zinc ions in an amount of 3 to 20 wt.%, calculated as ZnO,
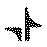 boron ions in an amount of 0,1 to 18 wt.%, calculated as B₂O₃,

whereby the glass composition is provided in a physical mixture with a manganese containing pigment in an amount of preferably 0,1 to 10 wt.%, more preferably 0,1 to 6 wt.%, more preferably 0,1 to 4 wt.%, based on the total weight of the composition, and
wherein the weight ratio between bismuth ions and zinc ions, calculated as Bi₂O₃ and ZnO, in the glass composition is 4 to 11.

The composition according to the second composition comprises a glass composition, comprising, based on the total weight of the composition,
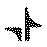 bismuth ions in an amount of 40 to 85 wt.%, calculated as Bi₂O₃,
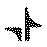 zinc ions in an amount of 3 to 20 wt.%, calculated as ZnO,
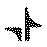 boron ions in an amount of 0,1 to 18 wt.%, calculated as B₂O₃,

whereby the glass composition is provided in a physical mixture with an iron containing pigment in an amount of preferably 0,1 to 30 wt.%, preferably 0,1 to 25 wt.%, more preferably 0,1 to 22 wt.%, based on the total weight of the composition
whereby the glass composition is provided in a physical mixture with a manganese containing pigment in an amount of preferably 0,1 to 10 wt.%, more preferably 0,1 to 6 wt.%, more preferably 0,1 to 4 wt.%, based on the total weight of the composition, and
wherein the weight ratio between bismuth ions and zinc ions, calculated as Bi₂O₃ and ZnO, in the glass composition is 4 to 11.

The composition according to the second composition comprises a glass composition, comprising, based on the total weight of the composition,
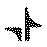 bismuth ions in an amount of 60 to 80 wt.%, calculated as Bi₂O₃,
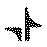 zinc ions in an amount of 5 to 18wt.%, calculated as ZnO,
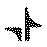 boron ions in an amount of 0,1 to 15 wt.%, calculated as B₂O₃,

whereby the glass composition is provided in a physical mixture with an iron containing pigment in an amount of preferably 0,1 to 30 wt.%, preferably 0,1 to 25 wt.%, more preferably 0,1 to 22 wt.%, based on the total weight of the composition, and
wherein the weight ratio between bismuth ions and zinc ions, calculated as Bi₂O₃ and ZnO, in the glass composition is 5 to 10.

The composition according to the second composition comprises a glass composition, comprising, based on the total weight of the composition,
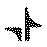 bismuth ions in an amount of 60 to 80 wt.%, calculated as Bi₂O₃,
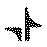 zinc ions in an amount of 5 to 18 wt.%, calculated as ZnO,
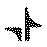 boron ions in an amount of 0,1 to 15 wt.%, calculated as B₂O₃,

whereby the glass composition is provided in a physical mixture with a manganese containing pigment in an amount of preferably 0,1 to 10 wt.%, more preferably 0,1 to 6 wt.%, more preferably 0,1 to 4 wt.%, based on the total weight of the composition, and
wherein the weight ratio between bismuth ions and zinc ions, calculated as Bi₂O₃ and ZnO, in the glass composition is 5 to 10.

The composition according to the second composition comprises a glass composition, comprising, based on the total weight of the composition,
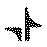 bismuth ions in an amount of 60 to 80 wt.%, calculated as Bi₂O₃,
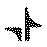 zinc ions in an amount of 5 to 18wt.%, calculated as ZnO,
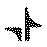 boron ions in an amount of 0,1 to 15 wt.%, calculated as B₂O₃,

whereby the glass composition is provided in a physical mixture with an iron containing pigment in an amount of preferably 0,1 to 30 wt.%, preferably 0,1 to 25 wt.%, more preferably 0,1 to 22 wt.%,, based on the total weight of the composition
whereby the glass composition is provided in a physical mixture with a manganese containing pigment in an amount of preferably 0,1 to 10 wt.%, more preferably 0,1 to 6 wt.%, more preferably 0,1 to 4 wt.%, based on the total weight of the composition, and
wherein the weight ratio between bismuth ions and zinc ions, calculated as Bi₂O₃ and ZnO, in the glass composition is 5 to 10.

### First and second embodiments

The compositions according to the first and second embodiments of the present invention may comprise up to 15 wt.% solids of a filler, selected from the group consisting of silica, alumina, zinc silicate, bismuth silicate, zinc oxide, zinc and mixtures thereof.

The compositions according to the first and second embodiments of the present invention may have preferably a D₉₀ particle size of the solid component 0,2 to 40 µm, more preferably 0,5 to 30 µm, more preferably 0,7 to 20 µm, whereby the D₉₀ particle size is measured by laser diffraction according to ISO 2019:13320.

The compositions according to the first and second embodiments of the present invention may have a firing temperature of preferably more than 600 °C, more preferably more than 605 °C, more preferably more than 610 °C.

The compositions according to the first and second embodiments of the present invention may have a firing temperature of preferably less than 690 °C, more preferably less than 670 °C, more preferably more than 650 °C.

The compositions according to the first and second embodiments of the present invention may have a firing temperature of preferably 600 to 690 °C, more preferably of 605 to 670 °C, more preferably of 610 to 650 °C.

The compositions according to the first and second embodiments of the present invention are suitable to dissolve conductive metal layers, including silver, and protective oxide/non-oxide non-conductive layers employed in the design of Low-e coatings for automotive or architectural applications.

The compositions according to the first and second embodiments of the present invention may be devoid of lead, cadmium, and vanadium.

The compositions according to the first and second embodiments of the present invention may further comprise at least one crystallizing agent.

The compositions according to the first and second embodiments of the present invention may further comprise at least one pigment, comprising at least one oxide selected from oxides of chromium, copper, cobalt and nickel.

The compositions according to the first and second embodiments of the present invention may further comprise an organic vehicle suitable for screen printing, inkjet printing, roller coating and spray coating.

The present invention further relates to a method of preparing the compositions according to the first or second embodiment of the present invention.

For this purpose, at first the glass frit which is common in the compositions according to the first and second embodiment are prepared and then ground to a fine powder using conventional methods. The frit component is then combined with the other solids components according to the first and second embodiment. Thereby, the composition according to the first embodiment is molten whereas the composition according to the second embodiment is physically mixed with the other solids components. The resulting mixtures are then mixed with a vehicle to form the enamel paste or ink.

The viscosity may be adjusted as desired for the specific application purpose.

Once the enamel paste is prepared, it can be applied to the substrate in a conventional manner such as by screen printing, roller coating, ink jet printing or the like.

Thereby, wet film thickness is preferably between 8 and 50 µm, in particular between 10 and 40 µm.

Therefore, a further subject-matter of the present invention is a method of applying the composition according to the first and second embodiments of the present invention by using screen printing, inkjet printing, roller coating and spray coating.

In the claimed method, the application of the composition according to the first and second embodiments of the present invention is carried out on a Low-e coated side of a glass surface.

In the claimed method, the glass surface is preferably a surface of a soda-lime glass, borosilicate, aluminosilicate glasses and/or lion glass.

In the claimed method, the composition according to the first and second embodiments of the present invention preferably dissolve conductive metal layers, including silver, and protective oxide/non-oxide non-conductive layers employed in the design of Low-e coatings for automotive or architectural applications.

After application of the paste or ink to a coated substrate in a desired pattern, the applied enamel is then fired to dissolve the Low E-coating and bond the enamel to the glass substrate.

The bending of the enameled glass sheet can be done by gravity or press bending. This can be done in a single firing or pre-firing and a subsequent pair bending process. For the bending process a separation powder is additionally used.

In the pre-firing step the coating is completely or partially dissolved and is then completely dissolved during a second bending firing. The firing range is typically in the range of about 570 to 750 ° C, more preferably in the range of about 570 to 700 °C.

The desired firing range can be adjusted by the content of composition.

Finally, the present invention also relates to the use of a composition according to the first and second embodiments of the present invention for press-bending used in automotive glass manufacturing.

### Examples

The frit compositions according to the present invention were prepared by mixing together the required raw materials and melting them to form a molten glass melt, then quenching to form a glass frit. In the following examples different amounts of iron oxide and even manganese oxide have been added to the frit formulation.

The milled frits were mixed with pigment, fillers and organic vehicle.

The black enamel pastes have been screen printed on a triple silver coated glass and fired at different temperatures.

In following examples, the effect of iron containing pigments on the gloss reduction in the black enamel will be demonstrated.

Following are black automotive enamel formulations, made with the coating dissolving glaze composition and different pigments.

**Table 1**

| **Sample** | **A** | **B** | **C** | **D** |
|---|---|---|---|---|
| Inorganic composition wt% | | | | |
| frit | 58, 5 | 58, 5 | 58, 5 | 58, 5 |
| Filler and seed material | 11,5 | 11,5 | 11,5 | 11,5 |
| Pigment 1 | 30,0 | 27,0 | 16,0 | 5,0 |
| Pigment 2 | | 3,0 | 3,0 | 3,0 |
| Pigment 3 | | | 11,0 | 22,0 |
| | | | | |
| gloss 60° | 41 | 17 | 12 | 3,9 |
| L* | 4 | 5,4 | 5,7 | 5,1 |
| optical density | 3,3 | 3 | 3,1 | 3,2 |

| | | | | |
|---|---|---|---|---|
| Pigment 1 is (Mn/Cu)-Cr-spinell Pigment 2 is high Mn-containing pigment Pigment 3 is high Fe-containing pigment | | | | |

The presence of high iron or manganese containing pigments may help to reduce the gloss level of the fired black enamel while achieving good L*values and high optical densities. Even low contents of such pigment can reduce the gloss significantly.

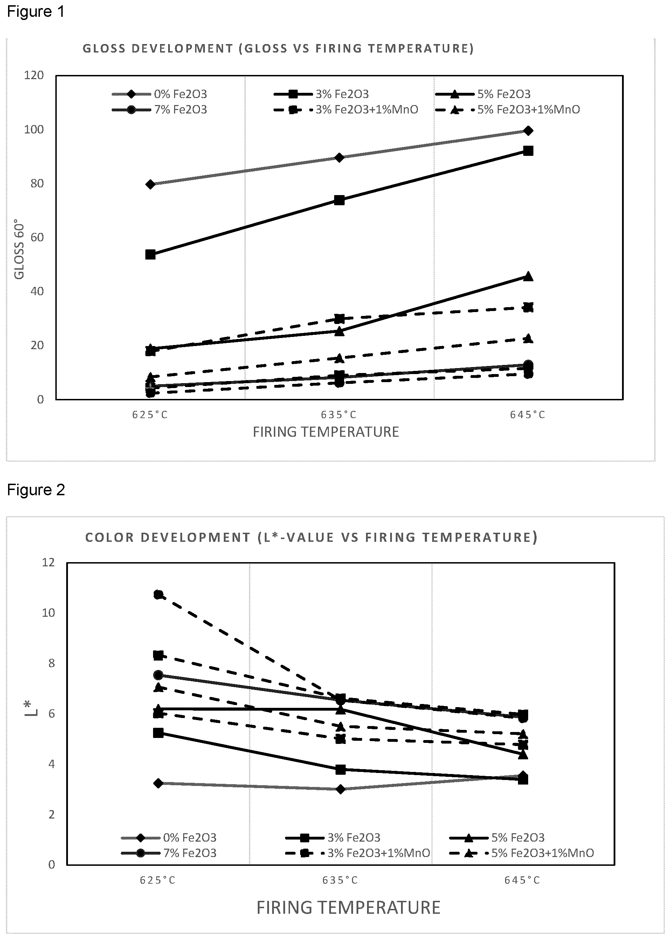

Figure 1 shows that the gloss level of the fired enamel could be significantly reduced with increasing amounts of iron oxide. The addition of 1% manganese oxide can enhance this effect.

Figure 2 the colour being measured from the glass side to check the dissolving effect of the black enamel on the Low-E coating. L*-values were measured with X-rite colorimeter.

L*-value increases with increasing amounts of iron oxide. At low temperature the coating is not completely dissolved. At higher temperatures the dissolving could be improved.

As demonstrated by these examples the frit composition which contains iron and manganese can reduce the gloss level and may help achieving anti-stick enamels.

## Claims

1. A composition, comprising, based on the total weight of the composition, bismuth ions in an amount of 30 to 90 wt.%, calculated as Bi₂O₃, zinc ions in an amount of 3 to 30 wt.%, calculated as ZnO, boron ions in an amount of 0,1 to 20 wt.%, calculated as B₂O₃, **characterized in that** the weight ratio between bismuth ions and zinc ions, calculated as Bi₂O₃ and ZnO, is 3 to 12.

2. The composition according to claim 1, **characterized in that** the composition comprises bismuth ions in an amount of 40 to 85 wt%, more preferably 60 to 80 wt%, based on the total weight of the composition, calculated as Bi₂O₃.

3. The composition according to claim 1 or 2, **characterized in that** the composition comprises boron ions in an amount of 0,1 to 18 wt%, more preferably 0,1 to 15 wt%, based on the total weight of the composition, calculated as B₂O₃.

4. The composition according to claim 1 or 3, **characterized in that** the composition comprises 3 to 20 wt%, more preferably 5 to 18 wt%, zinc ions, based on the total weight of the composition, calculated as ZnO.

5. The composition according to anyone of claims 1 to 4, **characterized in that** the composition further comprises less than 10 wt.%, preferably less than 8 wt.%, more preferably less than 7 wt.%, %, based on the total weight of the composition, sodium ions, potassium ions and lithium ions, calculated as Na₂O, K₂O, and Li₂O.

6. The composition according to anyone of claims 1 to 5, **characterized in that** the composition further comprises silicon ions in an amount of 0 to 5 wt.%, preferably 0 to 3 wt.%, more preferably 0 to 2 wt.%, based on the total weight of the composition, calculated as SiO₂.

7. The composition according to anyone of claims 1 to 6, **characterized in that** the composition further comprises 0,1 to 7 wt.%, preferably 0,1 to 5 wt.%, more preferably 0,1 to 3 wt.% iron ions, based on the total weight of the composition, calculated as Fe₂O₃.

8. The composition according to anyone of claims 1 to 7, **characterized in that** the composition further comprises 0,1 to 7 wt.%, preferably 0,1 to 5 wt.%, more preferably 0 to 3 wt.% manganese ions, based on the total weight of the composition, calculated as MnO.

9. The composition according to anyone of claim 1 to 8, **characterized in that** the composition is free of Al₂O₃.

10. The composition according to anyone of claims 1 to 9, **characterized in that** the composition is in the form of a molten glass.

11. The composition according to anyone of claims 1 to 6, **characterized in that** the composition further comprises an iron containing pigment in an amount of 0,1 to 30 wt.%, preferably 0,1 to 25 wt.%, more preferably 0,1 to 22 wt.%, based on the total weight of the composition.

12. The composition according to anyone of claims 1 to 6 and 11, **characterized in that** the composition further comprises 0,1 to 10 wt.%, preferably 0,1 to 6 wt.%, more preferably 0,1 to 4 wt.%, based on the total weight of the composition, of a manganese containing pigment.

13. Enamel, prepared by fusing the composition according to anyone of claims 1 to 12.

14. A method of applying the composition according to anyone of claims 1 to 12, **characterized in that** the application is carried out using screen printing, inkjet printing, roller coating and spray coating on a low-e coated side of a glass surface.

15. The method according to claim 14, **characterized in that** the glass surface is a surface of a soda-lime glass, borosilicate, aluminosilicate glasses and/or lion glass.
